# EUROPÄISCHE PATENTSCHRIFT

(11) **EP 0 433 325 B1**
(45) Veröffentlichungstag und Bekanntmachung des Hinweises auf die Patenterteilung: **19.10.1994**
(21) Anmeldenummer: 89909762.0
(22) Anmeldetag: 19.08.1989
(51) Int. Cl.: B05D 1/20, B05C 3/02

(54) **VERFAHREN UND VORRICHTUNG ZUR HERSTELLUNG DÜNNER SCHICHTEN**
PROCESS AND DEVICE FOR PRODUCING THIN LAYERS
PROCEDE ET DISPOSITIF POUR PRODUIRE DES COUCHES MINCES

(30) Priorität: 25.08.1988 DE 3828836
(43) Veröffentlichungstag der Anmeldung: 26.06.1991
(73) Patentinhaber: HOECHST AKTIENGESELLSCHAFT, 65926 Frankfurt am Main (DE)
(72) Erfinder: NITSCH, Walter, D-8133 Feldafing (DE); KURTHEN, Christoph, D-8000 München 2 (DE)
(86) Internationale Anmeldenummer: EP8900978
(87) Internationale Veröffentlichungsnummer: WO9001998

(56) Entgegenhaltungen:
- WO-A-87/04090
- FR-A- 2 341 199
- Patent Abstracts of Japan, vol. 10, No. 35, (E-380) (2092), 12 February 1986; & JP-A-60193326

## Beschreibung

Die Erfindung betrifft ein Verfahren und eine Vorrichtung zur Herstellung dünner Schichten aus mindestens einer amphiphilen Verbindung auf einem Träger. Bei dem erfindungsgemäßen Verfahren werden an der Grenzfläche zwischen einem Fluid und einer polaren Flüssigkeit Grenzschichten erzeugt und durch Strömung komprimiert. Die komprimierten Grenzschichten werden nach dem von Langmuir-Blodgett angegebenen Verfahren auf einen festen Träger übertragen.

Es ist bekannt, daß sich unlösliche, auf Flüssigkeitsoberflächen gespreitete Schichten aus amphiphilen Molekülen mit sogenannten Schubbarrieren mechanisch so komprimieren lassen, daß sich je nach Molekülsorte und Kompressionszustand des Oberflächenfilms beim Hindurchbewegen eines festen Trägers der Film auf diesen Träger übertragen läßt. Insbesondere ist die damit mögliche Mehrfachbeschichtung als sogenannte Langmuir-Blodgett-Technik bekannt und für verschiedene Anwendungen hochaktuell.

Dabei werden die Verbindungen meist in flüchtigen organischen Lösungsmitteln gelöst. Die Lösung wird auf der Oberfläche der polaren Flüssigkeit (fast immer Wasser) verteilt ("gespreitet") und dann das Lösungsmittel verdampft. Nur bei unlöslichen Molekülen lassen sich die für die Übertragung einer Schicht erforderlichen hohen Kompressionszustände durch Bewegen einer Barriere herstellen. Daher ist die Langmuir-Blodgett-Technik beschränkt auf Verbindungen, die in der Flüssigphase unlöslich sind.

Eine kontinuierliche Durchführung der Schichtübertragung ist äußerst aufwendig, da in diesem Fall auch die vorgelagerte Spreitung kontinuierlich erfolgen muß. Beschrieben wurde eine kontinuierliche Langmuir-Blodgett-Technik mit Hilfe eines mechanischen "Walzenverfahrens" durch A. Barraud et al. 1983 (Thin Solid Films 99, 221).

Aus WO-A-8 704 090 ist eine Vorrichtung zur Erzeugung eines monomolekularen Films bekannt, bei dem eine polare Flüssigkeit, die an der Oberfläche amphiphile Moleküle enthält, aus einem ersten Behälter durch eine Gefällstrecke in einen zweiten Behälter strömt. Die Gefällstrecke (120 a) ist etwas ebenso breit wie lang und enthält keine Barriere. Im zweiten Teil des Behälters kommt es zu einer Oberflächenkompression des Films der amphiphilen Moleküle. Die polare Flüssigkeit wird im Kreislauf durch die Vorrichtung gepumpt.

In Patent Abstracts of Japan, Band 20, Nr. 35, (E-380) (2092) wird JP-A-60 193 326 referiert, die ein Verfahren zur Herstellung dünner Schichten aus amphiphilen Verbindungen betrifft, bei dem strömendes Wasser in einem Behälter (3) durch eine Barriere (8) gestaut wird. Auf der Wasseroberfläche vor der Barriere bildet sich ein Film der amphiphilen Verbindung. Es wird nicht gesagt, daß der Film monomolekular ist und auf einen Schichtträger übertragen wird. Die Barriere (8) ist nicht horizontal angeordnet.

In FR-A-2 341 199 wird eine Beschichtungskammer zur Herstellung und Übertragung dünner Filme beschrieben, die an der Wasseroberfläche durch eine horizontal angeordnete Walze in zwei Abschnitte getrennt wird. In dem ersten Abschnitt wird eine amphiphile Verbindung aufgegeben und durch Rotation der Walze und Transparent eines dünnen Wasserfilms in den zweiten Abschnitt transportiert. Falls sich dort ein genügend großer Oberflächendruck in der erzeugten Schicht aufgebaut hat, findet die Übertragung der Schicht auf einen Schichtträger statt.

Schichten aus amphiphilen Molekülen, die in der Flüssigphase löslich sind, sind bei der üblichen mechanischen Kompression im Langmuir-Trog nicht übertragbar, weil sie durch Desorption in die Subphase "ausweichen".

Es bestand daher die Aufgabe, ein Verfahren zu schaffen, mit dem sich auch solche amphiphile Moleküle, die in der Subphase löslich sind, an der Oberfläche komprimieren und übertragen lassen. Ferner bestand die Aufgabe, ein Verfahren anzugeben, bei dem sich sowohl lösliche wie unlösliche amphiphile Moleküle auf der Oberfläche der Subphase anreichern und komprimieren lassen, so daß eine Übertragung möglich ist.

Das erfindungsgemäße Verfahren löst diese Aufgabe. Es betrifft die Herstellung mindestens einer monomolekularen geordneten Schicht aus einer amphiphilen Verbindung auf einem festen Träger (14), wobei man eine gerichtete Strömung einer polaren Flüssigkeit (12) erzeugt, die amphiphile Moleküle gelöst oder als unlösliche Moleküle an der Oberfläche in gespreiteter Form enthält, man durch Kompression und gegebenenfalls Spreitung eine mindestens teilweise ausgerichtete Schicht von Molekülen der amphiphilen Verbindung an der Grenzfläche (17) zwischen einem Fluid und der polaren Flüssigkeit herstellt. Dieses Verfahren ist dadurch gekennzeichnet, daß man die gerichtete Strömung in einem horizontal gelagerten Kanal (1, 23) erzeugt und an einer im Kanal an der Grenzfläche Fluid/polare Flüssigkeit horizontal angeordneten Barriere (13) staut, man die Strömungsgeschwindigkeit und gegebenenfalls die Konzentration der amphiphilen Moleküle so wählt, daß vor der Barriere (13) an der Phasengrenze von Fluid/polare Flüssigkeit laufend durch Kompression eine Schicht aus amphiphilen Molekülen gebildet wird, man den Träger (14) durch diese Kompressionszone bewegt und dabei die Schicht auf ihn überträgt, man die polare Flüssigkeit (12) hinter der Barriere sammelt, zurückführt und erneut zur Schichtbildung verwendet.

Die Übertragung der Schicht selbst kann beim erfindungsgemäßen Verfahren in an sich bekannter Weise nach der von Langmuir-Blodgett angegebenen diskontinuierlichen Technik erfolgen. Durch wiederholtes Eintauchen und Herausziehen des zu beschichtenden Trägers lassen sich viele Schichten übereinander erzeugen. Dabei werden meist (Eintauchen und Austauchen) Doppelschichten übertragen. Jedoch ist auch eine kontinuierliche Übertragung möglich. Beispielsweise läßt sich ein Polyester-Draht oder eine Polyester-Folie mit gleichmäßiger Geschwindigkeit in die polare Flüssigkeit an einer Stelle eintauchen, an der noch keine rigide Grenzschicht vorhanden ist, durch Rollen umlenken und an der Stelle der rigiden Grenzschicht wieder aus der Flüssigkeit herausziehen. Dabei wird er kontinuierlich mit einer monomolekularen Lage aus amphiphilen Molekülen überzogen. Die amphiphilen Moleküle können ionogen oder nichtionogen, niedermolekular oder hochmolekular sein.

Die auf den Träger aufgetragene dünne Schicht stellt zunächst einen monomolekularen Film dar. Durch Wiederholung des Verfahrens können jedoch mehrere Schichten übereinander aufgetragen werden. Wie beim LB-Verfahren können Filme aus reinen amphiphilen Verbindungen oder Filme, die aus einem Gemisch amphiphiler Verbindungen bestehen, auf einen Träger übertragen werden.

Das verwendete Fluid kann ein Gas oder eine unpolare Flüssigkeit darstellen, die in der polaren Flüssigkeit nicht löslich ist. Falls man mit zwei flüssigen Phasen arbeitet, kann die polare Flüssigkeit die obere oder die untere Phase (Beispiel: Grenzfläche von Toluol/Wasser enthaltend das Amphiphil Cephalin) darstellen. Auch die unpolare Flüssigkeit nimmt an der gerichteten Strömung teil.

Die verwendeten amphiphilen Verbindungen können löslich oder unlöslich sein. Unter "löslichen" amphiphilen Molekülen versteht man vorzugsweise Moleküle mit einer Löslichkeit in der polaren Flüssigkeit, die größer ist als die Löslichkeit von Hexadecansäure in Wasser. Bei sehr großer Löslichkeit, z. B. bei Essigsäure, lassen sich keine hoch komprimierten Schichten mehr erzeugen. Es lassen sich jedoch noch Schichten, die einfachen Ansprüchen genügen, erzeugen und übertragen. Gute Schichten lassen sich noch erzeugen, falls die Löslichkeit der Moleküle geringer ist als die von Hexansäure in Wasser.

Im Falle von löslichen amphiphilen Molekülen bildet sich ein stationäres Gleichgewicht zwischen sich in der Subphase wieder lösenden und durch die Strömung kontinuierlich nachgeführten Molekülen aus.

Die Barriere ist vorzugsweise so angeordnet, daß im wesentlichen nur die den Film tragende strömende Grenzfläche gestaut wird, weil auf diese Weise eine besonders gut definierte Strömung möglich ist.
Über die Barriere soll keine polare Flüssigkeit strömen.

Die Strömung im Kanal kann turbulent oder laminar sein. Es ist jedoch günstig, wenn sie zumindest kurz vor der Barriere laminar ist. Auf diese Weise läßt sich eine definierte Strömungsform erreichen, die wesentlich ist für die Gleichmäßigkeit der übertragenen Schichten.

Die Erhöhung der Strömungsgeschwindigkeit hat den gleichen Effekt wie die Erhöhung des Drucks mittels der waagerechten Barriere bei der LB-Technik.

Im Falle löslicher amphiphiler Moleküle führt eine Erhöhung der Konzentration ebenfalls zu einer Erhöhung des Grenzflächendrucks und damit der Kompression.

Falls die verwendete amphiphile Verbindung in der polaren Flüssigkeit unlöslich ist, gibt man sie in Form einer Lösung in einem Lösungsmittel zu, das sich dann auf der Oberfläche der polaren Flüssigkeit verteilt (= spreitet). Es ist günstig, diese Lösung kurz nach der Barriere zuzudosieren (etwa bis zu 10 % der gesamten Strömungsstrecke), weil dann am meisten Zeit für die gleichmäßige Verteilung der amphiphilen Moleküle an der Oberfläche besteht. Vorteilhafterweise wird beim Spreiten der unlöslichen amphiphilen Verbindung ein flüchtiges organischen Lösungsmittel verwendet. Dadurch kann man erreichen, daß je nach Strömungsgeschwindigkeit und Länge des Kanals das flüchtige Lösemittel auf dem Strömungsweg von der Spreitungsstelle zur Staustelle vor der Barriere völlig verdampft ist. Das Verdampfen kann durch Aufblasen von Trägergas beschleunigt werden.

Falls die verwendete amphiphile Verbindung in der polaren Flüssigkeit löslich ist, ist der Ort und die Art der Zugabe der Verbindung nicht kritisch. Im Strömungskanal kommt es (in Strömungsrichtung) zu einem gleichmäßigen Aufbau der Grenzschicht der amphiphilen Moleküle. Dies läßt sich an dem gleichmäßigen Abfall der Grenzflächenspannung erkennen, die an der vorderen Kante der Barriere minimal wird. Jedoch ist in diesem Fall der brauchbare Bereich der Konzentration deutlich von den Adsorptionseigenschaften des Amphiphils abhängig.

Eine Erhöhung der Strömungsgeschwindigkeit der polaren Flüssigkeit erhöht den Staudruck und beschleunigt die Ausbildung rigider, übertragbarer Schichten.
Eine niedrige Geschwindigkeit erfordert für die Einstellung des gleichen Staudrucks eine Verlängerung der Staubahn (linearer Abschnitt des Kanals vor der Barriere) oder eine Erhöhung der Konzentration.

Der Querschnitt des Kanals, in dem die Strömung erzeugt wird, ist nicht kritisch. Verwendbar ist z. B. ein U-förmiger oder ein V-förmiger Querschnitt. Bevorzugt wird aus Herstellungsgründen ein rechteckiger Querschnitt.

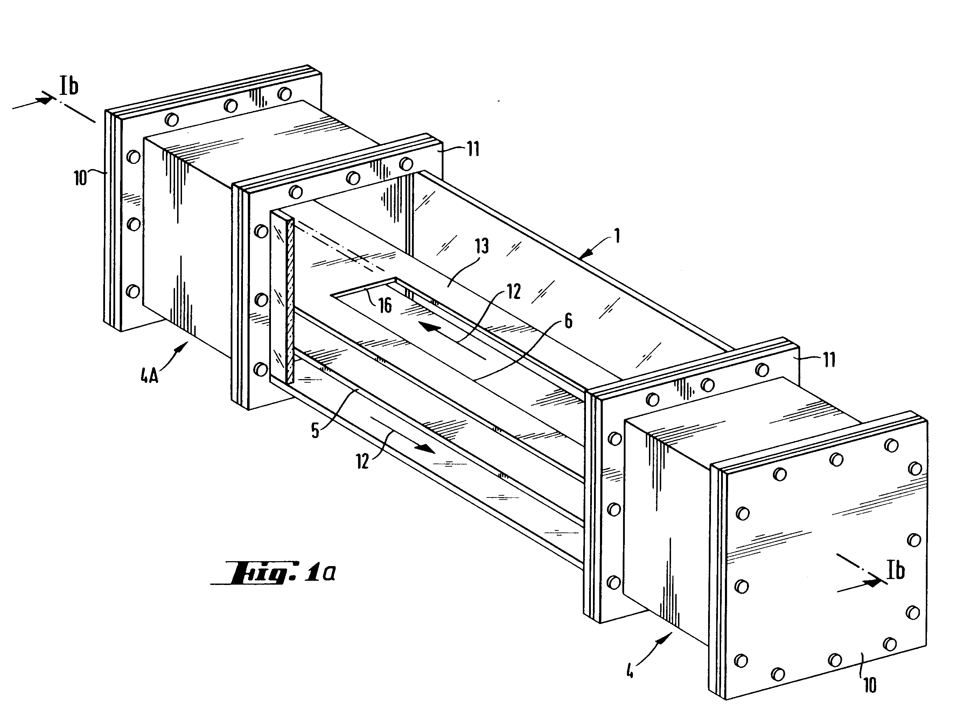

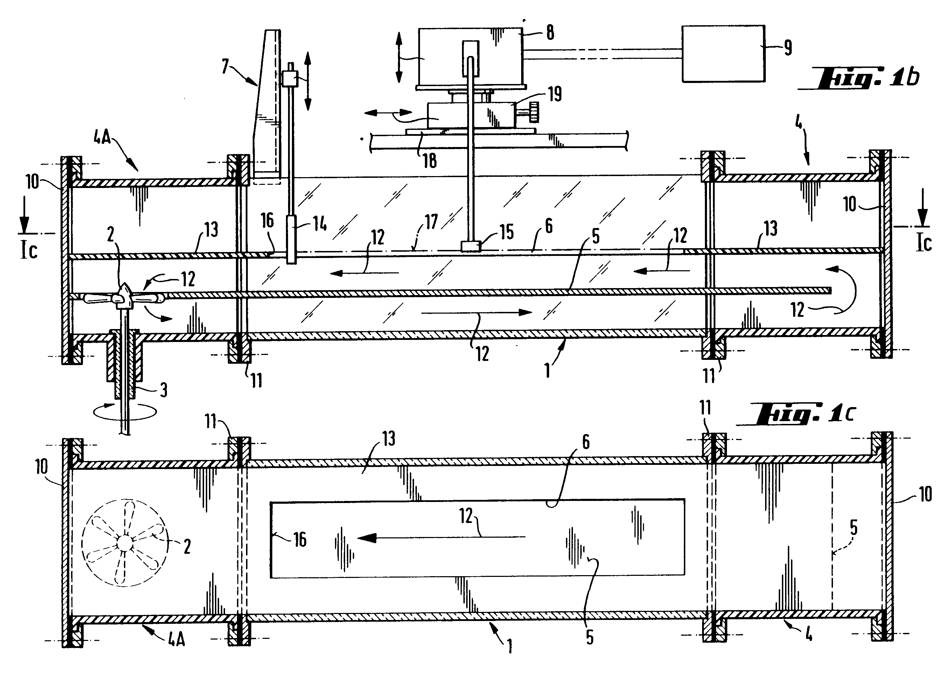

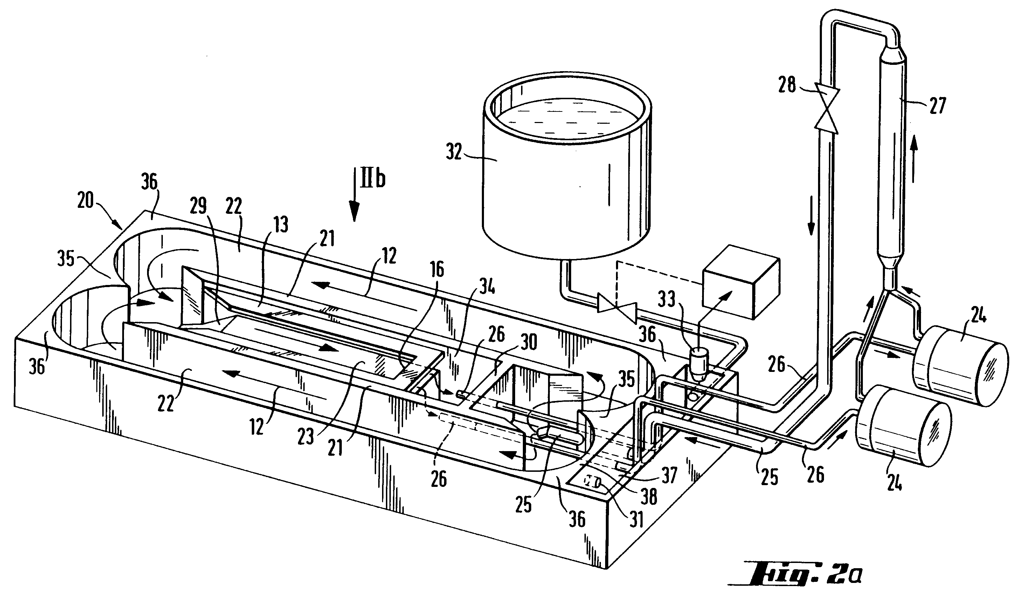

Wenn die Barriere linear ausgebildet und senkrecht zur Strömungsrichtung angeordnet ist und nicht die ganze Breite des Kanals einnimmt, so bildet sich nur längs einer relativ kurzen Zone ein rigider Film aus. Besser ist es, wenn die Barriere die gesamte Breite des Kanals einnimmt. Besonders bevorzugt ist es jedoch, wenn die Barriere Bestandteil eines U-förmigen oder O-förmigen Rahmens ist, dessen Öffnung gegen die Strömungsrichtung auf der Grenzfläche Fluid/polare Flüssigkeit angeordnet ist. Auf diese Weise wird der Einfluß der Randstörungen verringert. Der O-förmige Rahmen wird meist die Form eines Rechtecks einnehmen (vgl. 13 in Fig. 1a). Er ist gut für amphiphile Moleküle verwendbar, die in Wasser löslich sind.

Im einfachsten Fall ist es möglich, die strömende Flüssigkeit nur einmal zu verwerten. Es ist jedoch wirtschaftlich sinnvoll, die polare Flüssigkeit hinter der Barriere zu sammeln und, insbesondere kontinuierlich, zurückzuführen und erneut zur Schichtbildung zu verwenden. Die polare Flüssigkeit wird am besten unter dem Kanal oder seitlich des Kanals zurückgeführt.

Aus R. Ollenik und W. Nitsch, Bunsenges. Phys. Chem. 85 (1981), S. 901, ist bekannt, daß sich eine Kanalströmung zweier miteinander nicht mischbarer Flüssigkeiten an einer Kante stauen läßt und sich unter diesen Bedingungen eine starre Grenzflächenschicht einer amphiphilen Verbindung an der Grenzfläche beider Flüssigkeiten ausbilden läßt. Da bei der beschriebenen Apparatur eine der strömenden flüssigen Phasen oberhalb der starren Grenzflächenschicht zurückgeführt wird, kann aus räumlichen Gründen kein Träger von außen in die Kanalströmung eingetaucht werden. Ferner wird nicht beschrieben, daß die beobachtete Grenzflächenschicht sich auf feste Träger übertragen läßt.

Das erfindungsgemäße Verfahren ist besonders leicht durchführbar, wenn nur eine flüssige Phase verwendet wird, d. h. das Fluid ein Gas, insbesondere Luft ist.

Es ist jedoch auch möglich, daß das Fluid eine unpolare Flüssigkeit darstellt, die im Kanal in gleicher Richtung strömt wie die polare Flüssigkeit. In diesem Fall ist es sinnvoll, auch die unpolare Flüssigkeit hinter der Barriere zu sammeln und insbesondere kontinuierlich unter oder seitlich des Kanals zurückzuführen. Bei Verwendung einer unpolaren Flüssigkeit als strömende Phase können auch die amphiphilen Moleküle in das System als Lösung in der unpolaren Flüssigkeit zudosiert werden.

Vorteilhafterweise stellt die polare Flüssigkeit eine wäßrige Phase, beispielsweise eine wäßrige Salzlösung oder Wasser dar. Eine besonders günstige Ausgestaltung der Erfindung besteht darin, daß die polare Flüssigkeit Wasser ist und die zugesetzte amphiphile Verbindung eine in Wasser lösliche Verbindung, z. B. eine Perfluoralkancarbonsäure mit 4 - 14 C-Atomen, oder ein in Wasser lösliches Enzym ist. Da kein organisches Lösemittel für eine Spreitung benötigt wird, entfällt die Gefahr der Denaturierung.

Der Träger soll so langsam in die Kompressionszone (Zone mit rigider Grenzfläche) eingetaucht werden, daß die hierdurch bewirkte Entfernung des Filmes aus der Kompressionszone nicht schneller verläuft als die Neubildung des Films in dieser Zone. Dies gilt insbesondere für den Einsatz von Amphiphilen, die in der polaren Flüssigkeit löslich sind.

Die Ausbildung einer rigiden Grenzflächen-Schicht kann entweder durch Messung des Staudrucks mit einer Wilhelmywaage oder in einem Vorversuch durch Aufstreuen von Talkumteilchen auf die Oberfläche der strömenden Flüssigkeit (System: Gas/polare Flüssigkeit) nachgewiesen werden. Die Stauschicht und die Zunahme ihrer Länge während des Versuchs läßt sich auch durch einen Lichtsaum am Boden des Kanals erkennen. Bei Beleuchtung von oben erscheint diese Zone dunkler als der Einlauf in den Kanal.

Es zeigt sich, daß der Staudruck der Grenzfläche (Definition: Grenzflächenspannung der nicht mit Amphiphilen belegten Grenzfläche minus Grenzflächenspannung der belegten Oberfläche) in Strömungsrichtung zunimmt und am Wehr maximal wird.

Es ist ein Vorteil des erfindungsgemäßen Verfahrens, daß es auch Schichten löslicher amphiphiler Moleküle auf Grenzflächen herzustellen und von diesen auf Träger zu übertragen gestattet. Für die klassischen monomolekularen Filme aus unlöslichen amphiphilen Molekülen erlaubt es eine kontinuierliche Schichtbildung.

Eine erfindungsgemäße Vorrichtung zur Beschichtung eines festen Trägers mit einer monomolekularen geordneten Schicht einer amphiphilen Verbindung besteht aus:
1. einem horizontal angeordneten Strömungskanal (1, 23) zur Aufnahme einer Flüssigkeit (12),
2. einer Vorrichtung (2, 24) zur Erzeugung einer gerichteten Strömung der Flüssigkeit (12) im Strömungskanal (1, 23) und
3. einer Vorrichtung zum geregelten langsamen Eintauchen und Austauchen eines festen Trägers (14) in den Strömungskanal.

Sie ist dadurch gekennzeichnet, daß im Strömungskanal an der Phasengrenzfläche (17) der Flüssigkeit eine horizontale Barriere (13) zum Stau der Oberflächenströmung der Flüssigkeit (12) im Kanal (1, 23) angeordnet ist und das Eintauchen und Austauchen des festen Trägers (14) nahe vor dieser Barriere (13) stattfindet.

Zur Justage des Grenzflächenniveaus kann die Kammer ein Gefälle aufweisen; bei dem verwendeten Kanal vorzugsweise maximal 10°. Die Kompressionsströmung kann auch allein durch Neigen des Kanals erzeugt werden. Am Ende des Kanals befindet sich eine Pumpe, beispielsweise eine Umwälzpumpe, die die gesammelte strömende Flüssigkeit wieder zum Anfang des Kanals zurückbefördert. Falls zwei flüssige Phasen strömen, sind mindestens zwei Pumpen erforderlich.

Der Kanals soll eine Mindestlänge aufweisen, die von den Oberflächeneigenschaften des Amphilen, dessen Konzentration und der Strömungsgeschwindigkeit abhängt. Diese Mindestlänge kann durch Versuche leicht festgestellt werden. Je höher die Adsorbierbarkeit, die Konzentration und die Strömungsgeschwindigkeit, um so niedriger ist die Mindestlänge. Vorzugsweise ist das Verhältnis Länge des Kanals/Breite des Kanals größer als 1, insbesondere größer als 2.

Die Barriere erstreckt sich nach Möglichkeit nur an der Stelle der Grenzfläche Fluid/polare Flüssigkeit, soll also eine möglichst geringe Höhe aufweisen.

Der Kanal kann einen U-förmigen oder einen rechteckigen Querschnitt aufweisen. Die Barriere ist vorzugsweise Bestandteil eines U-förmigen oder O-förmigen horizontal angeordneten Rahmens. Der U-förmige Rahmen eignet sich für lösliche und insbesondere für unlösliche amphiphile Moleküle, der O-förmige Rahmen ("Fenster") insbesondere für die Schichtbildung aus löslichen amphiphilen Moleküle.

Vorrichtung zum geregelten langsamen Eintauchen und Austauchen eines festen Trägers in einer Flüssigkeit (z. B. Filmlift) sind von der LB-Technik her dem Fachmann bekannt.

Träger in Draht- oder Bandform lassen sich kontinuierlich beschichten. Hierzu wird der Träger an einer Stelle hinter der Barriere in die Stauschicht eingetaucht, durch zwei Umlenkrollen zunächst in der Flüssigkeit gegen die Strömungsrichtung weitergeleitet und im Bereich der Stauschicht kurz vor der Barriere etwa vertikal nach oben abgezogen Für das Aufwickeln beschichteter Bänder werden vorzugsweise keine zylindrischen Rollen, sondern Rollen mit konkaver Kontur, z. B. Globoidrollen, verwendet, um den übertragenen Film nicht zu beschädigen.

Bei einer einfachen erfindungsgemäßen Vorrichtung zur Erzeugung eines Grenzflächenfilms entspricht der Grundriß des Kanals etwa der Form des Umfangs eines Rechtecks. Die Barriere befindet sich nahe einer Ecke an einer Längsseite. An dieser Ecke wird aus einer Vertiefung des Kanals die Flüssigkeit abgepumpt, so daß dort das Flüssigkeitsniveau tiefer ist und die Flüssigkeit an der Barriere vorbei dorthin strömt. Die abgepumpte Flüssigkeit kann nahe der Ecke an der Schmalseite dem an dieser Stelle etwas höher angeordneten Kanal zurückgegeben werden, so daß sich eine Strömung bis zur Barriere einstellt. Die Strömung kann in diesem Fall auch durch ein rotierendes, kurz hinter der Barriere angeordnetes Wasserrad bewirkt werden.

Bei einer bevorzugten Vorrichtung zur Beschichtung eines Trägers (= Substrat) wird die strömende Flüssigkeit vertikal zurückgeführt. Als Fluid wird ein Gas, insbesondere Luft, verwendet. Diese Vorrichtung ist in Figur 1a perspektiv dargestellt, wobei die vordere Glasplatte weggelassen wurde. Figur 1b zeigt den Strömungskanal im Schnitt mit Aufbauten schematisch gemäß der Linie Ib-Ib in Fig. 1a. Figur 1c zeigt einen Schnitt gemäß Linie Ic-Ic in Fig. 1b.

Die im geschlossenen Kreislauf geführte polare Flüssigphase wurde mit einem 6-flügeligen Propellerrührer (2) aus Edelstahl umgewälzt. Das Lager (3) für die Rührerwelle war ein kalibriertes Präzisionsglas, das sich mit dem Wasser selbst schmiert. Der Kanalschuß (1) bestand aus Glasplatten mit optischer Qualität, die mit Glaslot zusammengefügt waren. Der Kanalschuß (1) war an seinen Enden mit den Gehäusen von Umlenkteil (4) und Förderteil (4A), die aus Edelstahl bestanden, durch Edelstahlflansche (11) verbunden. Die Abdichtung erfolgte durch PTFE-Band. Am Umlenkteil (4) wurde die flüssige Phase (12) von unten nach oben transportiert und dabei in Gegenrichtung umgelenkt. Der Trennboden (5) bestand aus VA-Blech.

Auf einer horizontal verschiebbaren Bühne (18) über der Phasenkontaktfläche (= rechteckiges Kanalfenster 6 im PTFE-Rahmen 13) war eine (auf einem Hubtisch (19) mit Mikrometerantrieb montierte) CAHN-Mikrowaage Typ 27 (8) zur Messung der Oberflächenspannung mittels Wilhelmyplatten (15) angebracht. Auch andere Möglichkeiten der Messung der Oberflächenspannung sind möglich. Der Filmlift (7) konnte an beliebigen Positionen direkt auf die Oberkante des Kanalschusses aufgestellt werden. Er diente zum Ein- und Austauchen des Trägers (14) und war insbesondere vor der Kante (16) der Barriere (13) aufgestellt, wo sich die Oberfläche (17) der strömenden Flüssigkeit (12) staute. Die CAHN-Mikrowaage (8) war mit dem X-Y-Schreiber (9) verbunden und horizontal verschiebbar. Die Kanalkonstruktion wurde in Längsrichtung durch die beiden angeflanschten Edelstahlplatten (10) begrenzt.

Die verwendete Kanal-Konstruktion ist eine Weiterentwicklung des von Ollenik und Nitsch (a.a.O.) beschriebenen Konstruktion. Der dargestellte Kanal kann auch so umgebaut werden, daß er zwei flüssige Phasen aufnimmt, die an der Berührungsfläche gleichsinnig strömen. Wegen des von oben eintauchenden Trägers kann nur die untere flüssige Phase vertikal zurückgeführt werden.

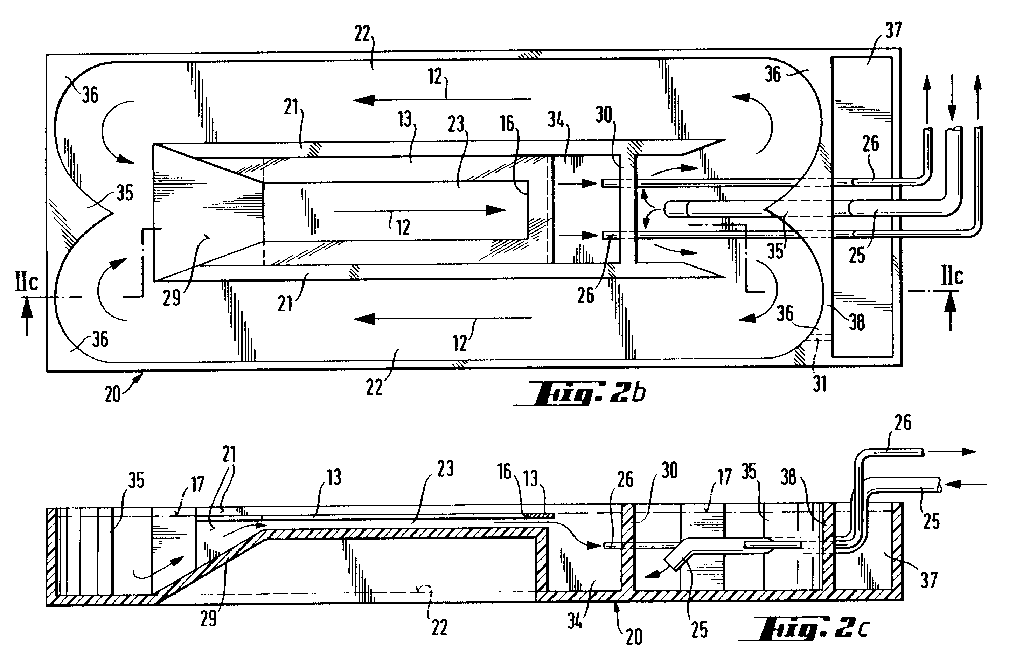

In einer anderen vorteilhaften Ausgestaltung der Erfindung wird in der Vorrichtung zur Beschichtung des Trägers die strömende Flüssigkeit horizontal zurückgeführt. Diese Vorrichtung ist in den Figuren 2a, 2b und 2c schematisch dargestellt. Figur 2a zeigt die Vorrichtung in perspektivischer Darstellung. Figur 2b zeigt die Vorrichtung in Aufsicht gemäß Pfeil IIb in Fig. 2a, Figur 2c im Schnitt entlang der Linie IIc-IIc von Fig. 2b

Der Apparat besteht im wesentlichen aus einem vorzugsweise rechteckigen Außenrahmen (20) und zwei Innen-Trennwänden (21), durch die eine Unterteilung in zwei Seitenkanäle (22) und einen Mittelkanal (23), der den eigentlichen Strömungskanal darstellt, erreicht wird. Die Strömung staut sich an der Kante (16) der Barriere des horizontal in Höhe der Flüssigkeitsgrenzfläche (17) angeordneten Rahmens (13).

Flexible bandartige Gegenstände können in den relativ flachen Kanal (23) links von der Barriere (16 in Figur 2a) eingetaucht werden. Es ist jedoch bevorzugt, die Barriere verschiebbar auszugestalten. Bei einer geringen Verschiebung nach rechts (in Figur 2a) lassen sich dann auch größere Gegenstände durch die Stauschicht hindurch in die Kammer (34) eintauchen.

Es ist vorteilhaft, daß sich der Querschnitt des Mittelkanals (23) hinter dem horizontal angeordneten Rahmen (13) mindestens um den Faktor 1 : 3 erweitert und dieser Kanal in eine Beruhigungskammer (34) einmündet. Diese Kammer wird in Strömungsrichtung durch die Trennwand (30) begrenzt. An die Kammer (34) ist mindestens ein Rohr (26) zum Absaugen der flüssigen Phase angeschlossen. Vorzugsweise geschieht das Absaugen durch mehrere Rohre. Ein gleichmäßiges Abziehen pro Flächeneinheit ohne Wirbelbildung kann durch breite Glasfritten erfolgen.

Das Abzugsrohr (26) ist mit mindestens einer Pumpe (24) und, falls gewünscht, mit einem Strömungsmesser verbunden. Als Strömungsmesser kann ein Rotameter (27) dienen. Zur Kontrolle der Absauggeschwindigkeit ist ein Regelventil (28) vorgesehen.

Über die Pumpen (24) und mindestens ein Rohr (25) gelangt die flüssige Phase in einen oder in zwei Seitenkanäle (22), von wo sie seitlich vom Mittelkanal (23) zu dessen Vorderteil zurückfließen kann.

Das Einlaufrohr (25) endet nicht in Kammer (34), sondern bereits vor der Wand (30). Bei der dargestellten Apparatur prallt die Flüssigkeit auf die Rückseite der Wand (30). Ebenso könnte man das Rohr in zwei Teile aufspalten und die Teile am Beginn (in Fig. 2a am rechten Ende) der Seitenkanäle (22) einmünden lassen.

Für das Funktionieren der Apparatur ist nur ein einziger Seitenkanal (22) erforderlich. Bevorzugt sind zwei Seitenkanäle.

Es ist vorteilhaft, wenn die zwei Seitenkanäle (22) symmetrisch zum zentralen Mittelkanal (23) angeordnet sind.

Es ist vorteilhaft, wenn der von Flüssigkeit durchströmte Querschnitt des Mittelkanals deutlich kleiner ist als in den Seitenkanälen. Die damit verbundene erhöhte Strömungsgeschwindigkeit wirkt sich günstig auf die Kompression und die Ausbildung einer Stauschicht im Bereich des Wehrs aus. Vorteilhafterweise verengt sich der Querschnitt des Mittelkanals längs einer Zone in der Nähe des Beginns des horizontal angeordneten Rahmens (13) kontinuierlich. Am einfachsten geschieht dies durch einen keilförmig verjüngten Körper (29) oder einen S-förmig abgerundeten, d. h. strömungstechnisch verbesserten Keil, der sich maximal bis zum Ende des Rahmens (13) erstreckte Die Schmalseite dieses Keils begrenzt auch die Beruhigungskammer (34).

Es ist günstig, wenn die Umlenkung der aus den Seitenkanälen in den Mittelkanal (23) strömenden Flüssigkeit verwirbelungsarm erfolgt. Hierzu können die Enden der inneren Trennwände (21) abgerundet oder zugespitzt sein. Die Zwickel an den inneren Ecken des Rechtecks, die tote Strömungswinkel bilden, sollen ausgefüllt sein (36). Ferner ist es günstig, wenn in der Mitte der Schmalseite des rechteckigen Rahmens (20) nahe des Beginns des Kanals ein etwa keilförmig ausgestalteter Umlenkkörper (35) für ein verwirbelungsarmes Zusammenfließen der Ströme zweier Seitenkanäle sorgt.

Vorzugsweise ist das Verhältnis von Länge/Breite für die Innenmaße des rechteckigen Außenrahmens (20) mindestens 2 : 1.

Die angegebene Vorrichtung kann weitgehend aus PTFE hergestellt werden.

Ein anderer Teil (37) des Kanalbeckens, der durch eine Trennwand (38) vom Strömungsteil (Mittelkanal + Seitenkanäle) abgetrennt ist, dient vorteilhafterweise zur Regulation des Flüssigkeitspegels. In diesem Teil des Beckens findet keine Konvektion der flüssigen Phase statt. Er steht durch eine kleine Öffnung (31) mit einem Seitenkanal in Verbindung. Durch die justierbare Photozelle (33), die mit einem Vorratsgefäß (32) für Flüssigkeit verbunden ist, läßt sich auch bei längerer Versuchsdauer der Flüssigkeitspegel konstant halten.

Wie oben beschrieben lassen sich auch in der Subphase lösliche Amphiphile einsetzen. Interessant ist dabei die Möglichkeit, auch Amphiphile einzusetzen, die sich nach der klassischen LB-Technik nicht übertragen lassen, beispielsweise Perfluoralkancarbonsäuren mit 4 bis 14, insbesondere 6 bis 14 Kohlenstoffatomen, wie z. B. Perfluordecansäure.

Die Erfindung betrifft daher auch ein Schichtelement, das aus mindestens einer monomolekularen geordneten Schicht einer amphiphilen Verbindung auf einem festen Träger besteht, wobei die amphiphile Verbindung eine Wasserlöslichkeit bei 18°C im Bereich von 0,001 bis 100 g/l besitzt und daher mit der klassischen Langmuir-Blodgett-Technik nicht übertragbar ist.

Bei höheren Löslichkeiten läßt sich der erforderliche Staudruck nur noch schwer erzeugen. Bei niedrigen Löslichkeiten könnte sich auch gegebenenfalls das LB-Verfahren eignen.

Wenn wasserlösliche Amphiphile sich an der Phasengrenze Luft/Wasser anreichern, kommt es zu einer Verminderung der Oberflächenspannung. Eine deutliche Verminderung ist für die Einsetzbarkeit von Vorteil. Daher sind amphiphile Verbindungen bevorzugt, die nicht unbegrenzt mit Wasser mischbar sind und deren gesättigte wäßrige Lösung bei 18°C eine Oberflächenspannung von maximal 65 dyn/cm, vorzugsweise maximal 50 dyn/cm, insbesondere maximal 40 dyn/cm aufweist.

Wasserlösliche Amphiphile tendieren bei der klassischen LB-Technik dazu, bei Kompression in der Subphase auszuweichen (zu desorbieren), so daß der Aufbau des für die Übertragung nötigen Oberflächendrucks nicht möglich ist. Dies zeigt sich daran, daß der bei der Kompression erhältliche maximale Oberflächendruck rasch abnimmt, wenn die Barriere nicht weiter vorgeschoben wird. Daher sind amphiphile Verbindungen, bei denen der Oberflächendruck in 5 Minuten oder weniger um 10 % oder mehr abbaut, nach der LB-Technik nicht übertragbar. Diese Einschränkung gilt jedoch nicht für das vorliegende Verfahren.

Der Aufbau von Schichtsystemen mit mehreren monomolekularen Schichten wird begünstigt, wenn die eingesetzten amphiphilen Verbindungen bei der Übertragungstemperatur fest sind und insbesondere einen Schmelzpunkt von über 50°C aufweisen.

Aus der DE-PS 36 21 474 ist bekannt, daß man nach der LB-Technik aliphatische Verbindungen mit einer Perfluoralkylgruppe, z. B. Fluorcarbonsäuren auf Wasser nur in Gegenwart von dreiwertigen Kationen spreiten und übertragen kann. Die so übertragenen Schichten enthalten noch dreiwertige Kationen.

Dagegen sind nach dem erfindungsgemäßen Verfahren Schichtelemente mit mehreren monomolekularen Lagen aus Perfluorcarbonsäure darstellbar, die frei sind von stabilisierenden zweiwertigen und dreiwertigen Kationen.

Es lassen sich jedoch auch Schichten von Salzen einer Perfluorcarbonsäure mit zweiwertigen Kationen wie Cd⁺⁺ oder Mg⁺⁺ herstellen und übertragen.

Die nach dem erfindungsgemäßen Verfahren erzeugten Schichten lassen sich für viele Zwecke verwenden. Beispielsweise kann die übertragene Komponente ein Enzym sein (Katalase) und die Enzymschicht zur Herstellung der aktiven Schicht eines Biosensors oder Biokatalysators verwendet werden.

Eine weitere Möglichkeit besteht darin, ein Amphiphil mit einer ungesättigten Gruppe auf einen Träger aufzutragen und dann auf diesem (z. B. durch Lichteinwirkung) zu polymerisieren.

Durch das erfindungsgemäße Verfahren lassen sich auch Halbleiter beschichten sowie Folien oder Textilien vergüten und Unterlagen für die Lackierung vorbereiten.

Die Erfindung wird durch die folgenden Beispiele näher erläutert.

### Beispiel 1

Verwendet wurde die weiter oben beschriebene Apparatur mit vertikaler Strömungsführung. Die Rührerdrehzahl betrug etwa 160/min, die über den Kanalguerschnitt gemittelte Strömungsgeschwindigkeit etwa 6,5 cm/sec. Die Länge des Kanals betrug 800 mm, die Breite 80 mm, das Volumen der Wasserphase betrug 2, 5 1, die Länge der Phasenkontaktfläche (6) 35 cm und die Breite dieses Kanalfensters 4 cm.

Auf Wasser als polarer Flüssigkeit wurde eine Schicht von Arachidinsäure gespreitet. Komprimierte man die Arachidinsäure mittels der Umlaufströmung auf einen Oberflächendruck (= Oberflächenspannung von Wasser - gemessene Oberflächenspannung) von 15 mN/m, so ließ sich diese Schicht auf eine hydrophil gemachte Glasplatte übertragen, die aus der Wasserphase durch die Grenzfläche gezogen wird. Durch Randwinkelmessung ließ sich die Übertragung der Schicht auf die Platte nachweisen.

Wenn man die Platte jedoch außerhalb der Stauschicht durch die Grenzfläche zieht, so bleibt der Randwinkel der Glasplatte unverändert, d. h. es findet keine Schichtübertragung statt.

Im Bereich der Stauschicht, insbesondere an der Stelle höchsten Grenzflächendrucks nahe der Barriere, wurde mit jedem erneuten Aus- und Einzug der Platte eine neue Schicht übertragen.

### Beispiel 2

Es wurde die gleiche Apparatur wie in Beispiel 1 verwendet. Verwendet wurden wäßrige Lösungen der wasserlöslichen Octancarbonsäure (Konzentration: 1,5 x 10⁻⁴ mol/l) bzw. Decancarbonsäure (Konzentration: 3 x 10⁻⁵ mol/l). Durch Messung mit der CAHN-Mikrowaage ließ sich zeigen, daß längs des Strömungsfensters sich ein linearer Gradient der Grenzflächenspannung bildete. An der Stelle höchsten Staudrucks (d. h. der geringsten Grenzflächenspannung) vor der Barriere konnte die Stauschicht auf eine aus der Wasserphase gezogenen Glasplatte übertragen werden. Es kam jedoch zu keiner Übertragung der Schicht, wenn die Tauchversuche außerhalb der komprimierten Stauschicht, d. h. in größerer Entfernung vor der Barriere, durchgeführt wurden. Auch hier ließ sich die Schichtübertragung durch Randwinkelmessung an der Glasplatte beurteilen.

### Beispiel 3

Verwendet wurde die oben beschriebene Apparatur mit horizontaler Rückführung der strömenden Flüssigkeit.
Die Messung der Oberflächenspannung erfolgte analog Beispiel 1 mittels einer CAHN-Mikrowaage.

Die Pumpenleistung der beiden Teflon-Taumelpumpen betrug jeweils ca. 1, 6 l/min, die wirksame Breite der Barriere 38 mm, die Länge des Rahmens 30 cm, der wirksame Strömungsquerschnitt am Wehr 4, 2 cm².

Für die Versuche wurde eine wäßrige Lösung von Perfluordecansäure einer Konzentration von 5 x 10⁻⁵ Mol/l eingesetzt. Der Oberflächendruck am Übertragungsort betrug 40 mN/m. An der Stelle des höchsten Staudruckes vor der Barriere wurden nacheinander je 7 Beschichtungen (Filmübertragung in beide Hubrichtungen, Film vom Y-Typ) auf Glasobjektträger (hydrophil), Chromoxidspiegel sowie Siliciumwafer übertragen. Die Filmübertragung wurde durch Randwinkelmessungen nachgewiesen.

### Beispiel 4

Es wurde die gleiche Apparatur wie in Beispiel 3 verwendet. Aufgegeben wurde auf reines Millipore-Wasser als Subphase, Omega-Trikosensäure als Chloroform-Lösung. Nach Ausbildung einer stabilen Stauschicht (Staudruck 30 mN/m) vor der Barriere wurden nacheinander 3 Silizium-Plättchen (4 x 1 cm) mehrmals beschichtet, die mit Chromschwefelsäure gereinigt und mit einer wäßrigen, mit NH₄F gepufferten HF-Lösung (®Selectipur; Hersteller Merck AG) hydrophobiert worden waren.

Auf- und Abwärts Hubbewegung des Filmlifts 6 cm/min. Übertragung von 20, 30 und 40 Schichten. Die ellipsometrischen Messungen lieferten folgende Gesamtschichtdicken:

| | |
|---|---|
| 20 Schichten: | 622,5 x 10⁻⁸ cm. |
| 30 Schichten: | 917,1 x 10⁻⁸ cm. |
| 40 Schichten: | 1223,0 x 10⁻⁸ cm. |

Der Brechungsindex betrug jeweils etwa 1,51.

Jede Messung wurde an 10 verschiedenen Punkten einschließlich des Randbereichs der beschichteten Fläche wiederholt. Dabei ergaben sich jeweils nur Abweichungen von unter 0,5 % für die Schichtdicke.

### Beispiel 5

Es wurde die gleiche Apparatur wie in Beispiel 3 verwendet. Ein Polyamid der allgemeinen Formel 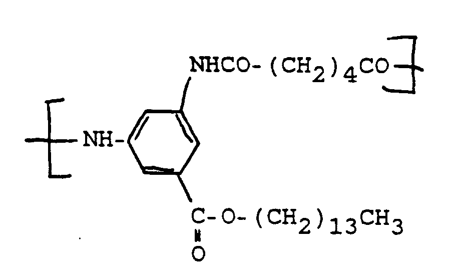
wurde in einem Lösemittelgemisch von 9 Teilen Dichlormethan und einem Teil N-Methyl-Pyrrolidon gelöst und das Polyamid auf Wasser gespreitet. Das mittlere Molgewicht des Polyamids betrug ca. 25 000.

Es wurden 20 Schichten bei ca. 25 mN/m auf die hydrophobierten Si-Wafer von Beispiel 4 übertragen. Auf- und Abwärts-Hubgeschwindigkeit des Filmlifts: 2 cm/min. Die ellipsometrische Messung ergab für den Brechungsindex einen Wert von 1,515 und für die Schichtdicke 4 54,3 x 10⁻⁸ cm.

### Beispiel 6

Es wurde die gleiche Apparatur wie in Beispiel 3 verwendet. Ein Nitrofarbstoff der allgemeinen Formel 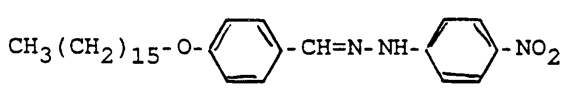
wurde in Dichlormethan gelöst und die Lösung des Farbstoffs auf Wasser gespreitet.

Übertragung bei 30 mN/m auf Glasobjektträger.
Hubgeschwindigkeit des Filmlifts: 2 cm/min.
Bei der Übertragung von 10 und 20 Schichten ergab sich jeweils ein homogenes Erscheinungsbild der Farbstoffschichten.

### Beispiel 7

Beispiel 3 wird wiederholt. Die eingesetzte Konzentration von Perfluordecansäure wurde jedoch auf 3 x 10⁻⁵ Mol/l verringert. Die Pumpenleistung betrug jeweils 1,8 l/min. Der Oberflächendruck am Übertragungsort betrug 40 mN/m. Es wurden nacheinander 20 bzw. 40 Schichten auf hydrophobierte Silizium-Wafer von Beispiel 4 übertragen (Filmübertragung in beiden Hubrichtungen, Film vom Y-Typ, Hubgeschwindigkeit jeweils 1 cm/min).

Die ellipsometrischen Messungen lieferten:
- für den Brechungsindex jeweils 1,3
- für die Schichtdicken: 20 Schichten ca. 250 x 10⁻⁸ cm
   40 Schichten ca. 500 x 10⁻⁸ cm
Das entspricht einer mittleren Schichtdicke von 12,5x10⁻⁸ cm für die Einzelschicht.

### Beispiel 8

Beispiel 7 wird wiederholt in Gegenwart von 2 x 10⁻⁴ M/l MgCl₂. Die ellipsometrischen Ergebnisse entsprechen denen von Beispiel 7.

### Beispiel 9

Beispiel 8 wird wiederholt. Die Übertragung der Schichten auf den Träger erfolgte bei einem Oberflächendruck von 50 mN/m. Es wurden 20, 40, 60 Schichten (Schichten vom Y-Typ) auf Silizium-Wafer übertragen, die vorher mit Dichlordimethylsilan hydrophobiert wurden. Die ellipsometrischen Messungen lieferten folgende Werte:

| | |
|---|---|
| 20 Schichten: | 326 x 10⁻⁸ cm |
| 40 Schichten: | 655 x 10⁻⁸ cm |
| 60 Schichten: | 970 x 10⁻⁸ cm |

Das entspricht einer mittleren Schichtdicke von ca. 16,3 x 10⁻⁸ cm für die Einzelschicht. Der Brechungsindex betrug jeweils 1,35.

## Patentansprüche

1. Verfahren zur Herstellung mindestens einer monomolekularen geordneten Schicht aus einer amphiphilen Verbindung auf einem festen Träger (14), wobei man eine gerichtete Strömung einer polaren Flüssigkeit (12) erzeugt, die amphiphile Moleküle gelöst oder als unlösliche Moleküle an der Oberfläche in gespreiter Form enthält, man durch Kompression und gegebenenfalls Spreitung eine mindestens teilweise ausgerichtete Schicht von Molekülen der amphiphilen Verbindung an der Grenzfläche (17) zwischen einem Fluid und der polaren Flüssigkeit herstellt, dadurch gekennzeichnet, daß man die gerichtete Strömung in einem horizontal gelagerten Kanal (1, 23) erzeugt und an einer im Kanal an der Grenzfläche Fluid/polare Flüssigkeit horizontal angeordneten Barriere (13) staut, man die Strömungsgeschwindigkeit und gegebenenfalls die Konzentration der amphiphilen Moleküle so wählt, daß vor der Barriere (13) an der Phasengrenze von Fluid/polare Flüssigkeit laufend durch Kompression eine Schicht aus amphiphilen Molekülen gebildet wird, man den Träger (14) durch diese Kompressionszone bewegt und dabei die Schicht auf ihn überträgt, man die polare Flüssigkeit (12) hinter der Barriere sammelt, zurückführt und erneut zur Schichtbildung verwendet.

2. Verfahren nach Anspruch 1, dadurch gekennzeichnet, daß die Strömung in einem Kanal (1, 23) mit rechteckigem Querschnitt erzeugt wird.

3. Verfahren nach Anspruch 1, dadurch gekennzeichnet, daß eine amphiphile Verbindung eingesetzt wird, deren Wasserlöslichkeit bei 18°C im Bereich von 0,001 bis 100 g/l liegt.

4. Verfahren nach Anspruch 1, dadurch gekennzeichnet, daß die Barriere (13) Bestandteil eines U-förmigen Rahmens ist, dessen Öffnung gegen die Strömungsrichtung auf der Grenzfläche (17) zwischen Fluid und polarer Flüssigkeit angeordnet ist.

5. Verfahren nach Anspruch 1, dadurch gekennzeichnet, daß die polare Flüssigkeit (12) unter oder seitlich der Barriere (13) zurückgeführt wird.

6. Verfahren nach Anspruch dadurch gekennzeichnet, daß man auf die Grenzfläche (17) zwischen Fluid und polarer Flüssigkeit (12) die Lösung einer in der polaren Flüssigkeit unlöslichen amphiphilen Verbindung zudosiert und spreitet.

7. Verfahren nach Anspruch 6, dadurch gekennzeichnet, daß die Lösung (in Strömungsrichtung) kurz nach der Barriere (13) zudosiert wird.

8. Verfahren nach Anspruch 6, dadurch gekennzeichnet, daß die Lösung einer amphiphilen Verbindung, die in der polaren Flüssigkeit (12) unlöslich ist, in einem flüchtigen organischen Lösemittel zudosiert wird.

9. Verfahren nach Anspruch 8, dadurch gekennzeichnet, daß man die Strömungsgeschwindigkeit und Länge des Kanals (1, 23) so einstellt, daß das flüchtige Lösemittel vor der Barriere völlig verdampft ist.

10. Verfahren nach Anspruch 1, dadurch gekennzeichnet, daß man die Strömungsgeschwindigkeit der polaren Flüssigkeit (12) so bemißt, daß die Strömung im Bereich der Barriere (13) laminar ist.

11. Verfahren nach Anspruch 1, dadurch gekennzeichnet, daß das Fluid ein Gas, insbesondere Luft, ist.

12. Verfahren nach Anspruch 1, dadurch gekennzeichnet, daß das Fluid eine unpolare Flüssigkeit ist, die im Kanal (1, 23) in gleicher Richtung strömt wie die polare Flüssigkeit (12) und man die unpolare Flüssigkeit hinter der Barriere (13) sammelt und kontinuierlich oder diskontinuierlich unter der Barriere oder seitlich der Barriere zurückführt.

13. Verfahren nach Anspruch 1, dadurch gekennzeichnet, daß die polare Flüssigkeit (12) eine wäßrige Phase darstellt.

14. Verfahren nach Anspruch 3, dadurch gekennzeichnet, daß die amphiphile Verbindung ein in Wasser lösliches Enzym ist.

15. Verfahren nach Anspruch 1, dadurch gekennzeichnet, daß man den festen Träger (14) so langsam in die Kompressionszone eintaucht, daß die hierdurch bewirkte Entfernung des Films aus der Kompressionszone nicht schneller verläuft als die Neubildung des Films in dieser Zone.

16. Verfahren nach Anspruch 12, dadurch gekennzeichnet, daß man der unpolaren Flüssigkeit die amphiphilen Moleküle in Form einer Lösung in der unpolaren Flüssigkeit zudosiert.

17. Verfahren nach Anspruch 1, dadurch gekennzeichnet, daß die Barriere (13) Bestandteil eines O-förmigen Rahmens ist, der auf der Grenzfläche zwischen Fluid und polarer Flüssigkeit (12) angeordnet ist, die polare Flüssigkeit die amphiphilen Molekülen in gelöster Form enthält und man zur Beschichtung den festen Träger (14) im Innenteil des O-förmigen Rahmens taucht.

18. Vorrichtung zur Beschichtung eines festen Trägers (14) mit einer monomolekularen geordneten Schicht einer amphiphilen Verbindung bestehend aus:
1. einem horizontal angeordneten Strömungskanal (1, 23) zur Aufnahme einer Flüssigkeit (12),
2. einer Vorrichtung (2, 24) zur Erzeugung einer gerichteten Strömung der Flüssigkeit (12) im Strömungskanal (1, 23) und
3. einer Vorrichtung zum geregelten langsamen Eintauchen und Austauchen eines festen Trägers (14) in den Strömungskanal, dadurch gekennzeichnet, daß im Strömungskanal an der Phasengrenzfläche (17) der Flüssigkeit eine horizontale Barriere (13) zum Stau der Oberflächenströmung der Flüssigkeit (12) im Kanal (1, 23) angeordnet ist und das Eintauchen und Austauchen des festen Trägers (14) nahe vor dieser Barriere (13) stattfindet.

19. Vorrichtung nach Anspruch 18, dadurch gekennzeichnet, daß der Kanal (1, 23) einen rechteckigen Querschnitt hat.

20. Vorrichtung nach Anspruch 18, dadurch gekennzeichnet, daß die Barriere (13) Bestandteil eines U-förmigen oder O-förmigen horizontal angeordneten Rahmens ist.

21. Vorrichtung nach Anspruch 18, dadurch gekennzeichnet, daß sich in Strömungsrichtung hinter der Barriere (13) eine Beruhigungskammer (34) befindet, deren Querschnitt mindestens um den Faktor 3 größer ist als der Querschnitt des Kanals im Bereich der Barriere (13) und die mindestens ein Rohr (26) zum Absaugen der flüssigen Phase (12) enthält.

22. Vorrichtung nach Anspruch 21, dadurch gekennzeichnet, daß die Abzugsrohre (26) mit Pumpen verbunden sind.

23. Vorrichtung nach Anspruch 22, dadurch gekennzeichnet, daß die Pumpen über Rohre mit mindestens einem Seitenkanal (22) verbunden sind, durch den die Flüssigkeit seitlich vom Strömungskanal (1, 23) mit Barriere (13) zu dessen Beginn zurückfließen kann.

24. Vorrichtung nach Anspruch 20, dadurch gekennzeichnet, daß sich der Querschnitt des Strömungskanals (1, 23) längs einer Zone in der Nähe des Beginns des an der Phasengrenzfläche angeordneten Rahmens kontinuierlich verringert.

25. Vorrichtung nach Anspruch 23, dadurch gekennzeichnet, daß Strömungskanal (23) und Seitenkanäle (22) innerhalb eines rechteckigen Rahmens angeordnet sind.

26. Vorrichtung nach Anspruch 24, dadurch gekennzeichnet, daß (in Strömungsrichtung) nach der Zone der Verringerung des Querschnitts sich eine Zone mit konstantem verringertem Querschnitt anschließt.

27. Vorrichtung nach Anspruch 26, dadurch gekennzeichnet, daß (in Strömungsrichtung) nach der Zone mit konstantem verringertem Querschnitt eine Kammer (34) angeordnet ist deren Querschnitt mindestens um den Faktor 3 größer ist als in der Zone mit konstantem verringerten Querschnitt und im Bereich dieser Kammer die Barriere (13) angeordnet ist.

28. Schichtelement bestehend aus mindestens einer monomolekularen geordneten Schicht einer amphiphilen Verbindung auf einem festen Träger (14), dadurch gekennzeichnet, daß die amphiphile Verbindung eine Wasserlöslichkeit bei 18°C im Bereich von 0,001 bis 100 g/l besitzt und daher mit der klassischen Langmuir-Blodgett-Technik nicht übertragbar ist.

29. Schichtelement gemäß Anspruch 28, dadurch gekennzeichnet, daß die amphiphile Verbindung eine Perfluoralkancarbonsäure mit 4 bis 14, insbesondere 6 bis 14 Kohlenstoffatomen darstellt.

30. Schichtelement gemäß Anspruch 29, dadurch gekennzeichnet, daß die amphiphile Verbindung Perfluordecansäure ist.

31. Schichtelement gemäß Anspruch 28, dadurch gekennzeichnet, daß eine gesättigte Lösung der amphiphilen Verbindung bei 18°C eine Oberflächenspannung von 65 dyn/cm oder weniger, vorzugsweise von 50 dyn/cm oder weniger, aufweist.

32. Schichtelement gemäß Anspruch 28, dadurch gekennzeichnet, daß als amphiphile Verbindung das Salz einer Perfluorcarbonsäure mit 4 bis 14 Kohlenstoffatomen mit einem zweiwertigen Kation ausgewählt wird.

## Claims

1. A process for producing at least one monomolecular ordered layer of an amphiphilic compound on a solid carrier (14), in which a directional flow of a polar liquid (12) which contains amphiphilic molecules in solution or as insoluuble molecules in a spread form on the surface is generated, an at least partially oriented layer of molecules of the amphiphilic compound is produced by compression and, if appropriate, spreading at the interface (17) between a fluid and the polar liquid, which comprises generating, in a horizontally located channel (1, 23), the directional flow and damming the flow at a barrier (13) arranged horizontally in the channel at the fluid/polar liquid interface, selecting the flow velocity and, if appropriate, the concentration of the amphiphilic molecules in such a way that a layer of amphiphilic molecules is continuously formed by compression in front of the barrier (13) at the fluid/polar liquid phase boundary, moving the carrier (14) through this compression zone while transferring the layer onto it, and collecting the polar liquid (12) behind the barrier, returning it and reusing it for layer formation.

2. The process as claimed in claim 1, wherein the flow is generated in a channel (1, 23) of rectangular cross-section.

3. The process as claimed in claim 1, wherein the water solubility of the amphiphilic compound employed is in the range from 0.001 to 100 g/l at 18°C.

4. The process as claimed in claim 1, wherein the barrier (13) is a component of a U-shaped frame, the opening of which is arranged to face the direction of flow on the fluid/polar liquid interface (17).

5. The process as claimed in claim 1, wherein the polar liquid (12) is returned underneath the barrier (13) or to the side thereof.

6. The process as claimed in claim 1, wherein the solution of an amphiphilic compound insoluble in the polar liquid is metered onto the fluid/polar liquid (12) interface (17) and spread.

7. The process as claimed in claim 6, wherein the solution is metered on just after the barrier (13) (in the flow direction).

8. The process as claimed in claim 6, wherein the solution of an amphiphilic compound, which is insoluble in the polar liquid (12), is metered on in a volatile organic solvent.

9. The process as claimed in claim 8, wherein the flow velocity and the length of the channel (1, 23) are adjusted such that the volatile solvent has completely evaporated before the barrier.

10. The process as claimed in claim 1, wherein the flow velocity of the polar liquid (12) is set such that the flow is laminar in the region of the barrier (13).

11. The process as claimed in claim 1, wherein the fluid is a gas, in particular air.

12. The process as claimed in claim 1, wherein the fluid is a non-polar liquid which flows in the channel (1, 23) in the same direction as the polar liquid (12), and the non-polar liquid is collected behind the barrier (13) and returned continuously or discontinuously underneath the barrier or to the side thereof.

13. The process as claimed in claim 1, wherein the polar fluid (12) represents an aqueous phase.

14. The process as claimed in claim 3, wherein the amphiphilic compound is a water-soluble enzyme.

15. The process as claimed in claim 1, wherein the solid carrier (14) is immersed into the compression zone so slowly that the removal of the film, thus effected, from the compression zone does not proceed faster than the reformation of the film in this zone.

16. The process as claimed in claim 12, wherein the amphiphilic molecules are metered in the form of a solution in the non-polar liquid into the non-polar liquid.

17. The process as claimed in claim 1, wherein the barrier (13) is a component of an O-shaped frame located on the interface between the fluid and the polar liquid (12) and the polar liquid contains the amphiphilic molecules in the dissolved form, and, for coating, the solid carrier (14) is dipped into the inner part of the O-shaped frame.

18. An apparatus for coating a solid carrier (14) with a monomolecular ordered layer of an amphiphilic compound, comprising
1. a horizontally arranged flow channel (1, 23) for taking up a liquid (12),
2. a device (2, 24) for generating a directional flow of the liquid (12) in the flow channel (1, 23) and
3. a device for controlled slow immersion of a solid carrier (14) into the flow channel and emersion therefrom,
wherein, in the flow channel at the interface (17) of the liquid, a horizontal barrier (13) is arranged for damming the surface flow of the liquid (12) in the channel (1, 23), and the immersion and emersion of the solid carrier (14) takes place closely in front of this barrier (13).

19. The apparatus as claimed in claim 18, wherein the channel (1, 23) has a rectangular cross-section.

20. The apparatus as claimed in claim 18, wherein the barrier (13) is a component of a U-shaped or O-shaped, horizontally arranged frame.

21. The apparatus as claimed in claim 18, wherein, downstream of the barrier (13) in the direction of flow, there is a relaxation chamber (34), the cross-section of which is greater by a factor of at least 3 than the cross-section of the channel in the region of the barrier (13) and which contains at least one tube (26) for extracting the liquid phase (12) by suction.

22. The apparatus as claimed in claim 21, wherein the extraction tubes (26) are connected to pumps.

23. The apparatus as claimed in claim 22, wherein the pumps are connected via pipes to at least one side channel (22), through which the liquid can flow back at the side of the flow channel (1, 23) with barrier (13) to the start thereof.

24. The apparatus as claimed in claim 20, wherein the cross-section of the flow channel (1, 23) diminishes continuously along a zone in the vicinity of the start of the frame located at the phase boundary.

25. The apparatus as claimed in claim 23, wherein the flow channel (23) and side channels (22) are arranged within a rectangular frame.

26. The apparatus as claimed in claim 24, wherein the zone of the reduction in cross-section is followed (with direction of flow) by a zone of constant reduced cross-section.

27. The apparatus as claimed in claim 26, wherein, downstream (in the direction of flow) of the zone of constant reduced cross-section, a chamber (34) is arranged, the cross-section of which is greater by a factor of at least 3 than that in the zone of constant reduced cross-section, and the barrier (13) is located in the region of this chamber.

28. A layer element composed of at least one monomolecular ordered layer of an amphiphilic compound on a solid carrier (14), wherein the amphiphilic compound has a water solubility in the range from 0.001 to 100 g/l at 18°C and therefore cannot be transferred by the conventional Langmuir-Blodgett technique.

29. A layer element as claimed in claim 28, wherein the amphiphilic compound is a perfluoroalkanecarboxylic acid having 4 to 14 carbon atoms, in particular 6 to 14 carbon atoms.

30. A layer element as claimed in claim 29, wherein the amphiphilic compound is perfluorodecanoic acid.

31. A layer element as claimed in claim 28, wherein a saturated solution of the amphiphilic compound has a surface tension of 65 dynes/cm or less, preferably 50 dynes/cm or less, at 18°C.

32. A layer element as claimed in claim 28, wherein the amphiphilic compound selected is the salt of a perfluorocarboxylic acid having 4 to 14 carbon atoms with a divalent cation.

## Revendications

1. Procédé pour la fabrication d'au moins une couche monomoléculaire ordonnée à partir d'un composé amphiphile sur un substrat solide (14), par lequel on produit l'écoulement orienté d'un liquide polaire (12), lequel comprend des molécules amphiphiles dissoutes ou insolubles étalées a la surface, par lequel on obtient par compression, et éventuellement par étalement, une couche de molécules amphiphiles orientée au moins partiellement a l'interface (17) entre un fluide et le liquide polaire, caractérisé en ce que l'on produit l'écoulement orienté dans un canal agencé horizontalement (1, 23) et que l'on comprime l'écoulement au niveau d'une barrière (13) placée horizontalement dans le canal a l'interface fluide/liquide polaire, en ce que l'on choisit la vitesse du débit et, éventuellement, la concentration des molécules amphiphiles de manière a former en permanence par compression une couche de molécules amphiphiles devant la barrière (13) a l'interface des phases fluide/liquide polaire, en ce que l'on déplace le substrat (14) à travers cette zone de compression, la couche y étant ainsi transférée, en ce que l'on réutilise le liquide polaire (12), recueilli derrière la barrière et ramené a l'entrée du canal, pour former de nouvelles couches.

2. Procédé selon la revendication 1, caractérisé en ce que l'écoulement est produit dans un canal (1, 23) a section rectangulaire.

3. Procédé selon la revendication 1, caractérisé en ce que l'on utilise un composé amphiphile, dont la solubilité dans l'eau a 18 °C est située dans une plage comprise entre 0,001 et 100 g/l.

4. Procédé selon la revendication 1, caractérisé en ce que la barrière (13) fait partie intégrante d'un cadre en U, dont l'ouverture est positionnée à contre-courant de l'écoulement sur l'interface (17) entre le fluide et le liquide polaire.

5. Procédé selon la revendication 1, caractérisé en ce que le liquide polaire (12) est ramené sous la barrière (13) ou latéralement à celle-ci.

6. Procédé selon la revendication 1, caractérisé en ce que la solution d'un composé amphiphile insoluble dans le liquide polaire est ajoutée et étalée sur l'interface (17) entre le fluide et le liquide polaire (12).

7. Procédé selon la revendication 6, caractérisé en ce que la solution est additionnée par dosage juste derrière la barrière (13) (dans le sens de l'écoulement).

8. Procédé selon la revendication 6, caractérisé en ce que la solution d'un composé amphiphile, qui est insoluble dans le liquide polaire (12), est additionnée par dosage dans un solvant organique volatil.

9. Procédé selon la revendication 8, caractérisé en ce que la vitesse d'écoulement et la longueur du canal (1, 23) sont ajustées de manière à ce que le solvant volatil soit totalement évaporé avant la barrière.

10. Procédé selon la revendication 1, caractérisé en ce que la vitesse d'écoulement du liquide polaire (12) est calculée de manière à ce que l'écoulement à proximité de la barrière (13) soit laminaire.

11. Procédé selon la revendication 1, caractérisé en ce que le fluide est un gaz, notamment de l'air.

12. Procédé selon la revendication 1, caractérisé en ce que le fluide est un liquide non polaire qui s'écoule dans le canal (1, 23) dans le même sens que le liquide polaire (12), en ce que l'on recueille le liquide non polaire derrière la barrière (13) pour le ramener en continu ou en discontinu sous la barrière ou latéralement à celle-ci.

13. Procédé selon la revendication 1, caractérisé en ce que le liquide polaire (12) est une phase aqueuse.

14. Procédé selon la revendication 3, caractérisé en ce que le composé amphiphile est une enzyme soluble dans l'eau.

15. Procédé selon la revendication 1, caractérisé en ce que l'on plonge le substrat solide (14) dans la zone de compression suffisamment lentement pour que l'élimination ainsi provoquée du film hors de la zone de compression ne se déroule pas plus vite que la formation d'un nouveau film dans cette zone.

16. Procédé selon la revendication 12, caractérisé en ce que l'on additionne au liquide non polaire, par dosage, les molécules amphiphiles en solution dans le liquide non polaire.

17. Procédé selon la revendication 1, caractérisé en ce que la barrière (13) fait partie intégrante d'un cadre en O, lequel est disposé sur l'interface entre le fluide et le liquide polaire (12), en ce que le liquide polaire contient les molécules amphiphiles dissoutes, et en ce que l'on immerge à l'intérieur du cadre en O le substrat solide (14) à revêtir.

18. Dispositif de revêtement d'un substrat solide (14) à l'aide d'une couche monomoléculaire ordonnée d'un composé amphiphile, comprenant
1. un canal d'écoulement (1, 23) disposé horizontalement pour recevoir un liquide (12),
2. un dispositif (2, 24) destiné à produire un écoulement orienté du liquide dans le canal d'écoulement (1, 23), et
3. un dispositif servant à immerger un substrat solide (14) dans le canal d'écoulement et à l'en extraire lentement et de manière contrôlée, caractérisé en ce qu'une barrière horizontale (13) est disposée dans le canal d'écoulement à l'interface (17) du liquide afin de comprimer l'écoulement superficiel du liquide (12) dans le canal (1, 23), et en ce que l'immersion et l'extraction du substrat solide (14) se produisent devant ladite barrière (13) et à proximité de celle-ci.

19. Dispositif selon la revendication 18, caractérisé en ce que le canal (1, 23) présente une section rectangulaire.

20. Dispositif selon la revendication 18, caractérisé en ce que la barrière (13) fait partie intégrante d'un cadre en U ou en O placé horizontalement.

21. Dispositif selon la revendication 18, caractérisé en ce qu'une chambre de stabilisation (34) est aménagée derrière la barrière (13) dans le sens de l'écoulement, chambre dont la section est au moins trois fois supérieure à la section du canal à proximité de la barrière (13), et qui comporte au moins un tube destiné à aspirer la phase aqueuse.

22. Dispositif selon la revendication 21, caractérisé en ce que les tubes d'évacuation (26) sont reliés à des pompes.

23. Dispositif selon la revendication 22, caractérisé en ce que les pompes sont reliées par des tubes à un canal latéral (22) au moins, canal latéral par lequel le liquide peut retourner à l'entrée du canal d'écoulement (1, 23) comportant la barrière (13), et longeant ledit canal d'écoulement.

24. Dispositif selon la revendication 20, caractérisé en ce que la section du canal d'écoulement (1, 23) se rétrécit régulièrement le long d'une zone proche de l'entrée du cadre positionné à l'interface des phases.

25. Dispositif selon la revendication 23, caractérisé en ce que le canal d'écoulement (23) et les canaux latéraux (22) sont disposés à l'intérieur d'un cadre rectangulaire.

26. Dispositif selon la revendication 24, caractérisé en ce que la zone de rétrécissement de la section est suivie (dans le sens de l'écoulement) d'une zone à section réduite et constante.

27. Dispositif selon la revendication 26, caractérisé en ce que la zone à section réduite est suivie (dans le sens de l'écoulement) d'une chambre (34) dont la section est au moins trois fois supérieure à celle de la zone à section réduite et constante, et en ce que la barrière (13) est aménagée dans la zone de cette chambre.

28. Elément stratifié comprenant au moins une couche monomoléculaire ordonnée d'un composé amphiphile sur un substrat solide (14), caractérisé en ce que le composé amphiphile possède à 18 °C une solubilité dans l'eau située dans une plage comprise entre 0,001 et 100 g/l, et qu'il n'est en conséquence pas transférable par la technique classique de Langmuir-Blodgett.

29. Elément stratifié selon la revendication 28, caractérisé en ce que le composé amphiphile est un acide alcaneperfluorocarboxylique comportant 4 à 14 atomes de carbone, notamment 6 à 14.

30. Elément stratifié selon la revendication 29, caractérisé en ce que le composé amphiphile est un acide décaneperfluorique.

31. Elément stratifié selon la revendication 28, caractérisé en ce qu'une solution saturée du composé amphiphile présente à 18 °C une tension superficielle de 65 dyn/cm ou moins, de préférence de 50 dyn/cm ou moins.

32. Elément stratifié selon la revendication 28, caractérisé en ce que l'on choisit comme composé amphiphile le sel d'un acide perfluorocarboxylique possédant 4 à 14 atomes de carbone avec un cation bivalent.
